# EUROPÄISCHE PATENTSCHRIFT

(11) **EP 2 174 820 B1**
(45) Veröffentlichungstag und Bekanntmachung des Hinweises auf die Patenterteilung: **23.05.2012**
(21) Anmeldenummer: 09450182.2
(22) Anmeldetag: 24.09.2009
(51) Int. Cl.: B60K 15/03, B60K 15/077

(54) **Innenwand für einen Fahrzeugtank**
Interior wall for a vehicle tank
Paroi intérieure pour un réservoir de véhicule

(30) Priorität: 10.10.2008 AT 5792008
(43) Veröffentlichungstag der Anmeldung: 14.04.2010
(73) Patentinhaber: Alutech Gesellschaft m.b.H., 5651 Lend (AT)
(72) Erfinder: Tevini, Gerhard, 5700 Zell am See (AT); Lind, Christoph, 8200 Gleisdorf (AT)
(74) Vertreter: Weiser, Andreas

(56) Entgegenhaltungen:
- EP-A1- 0 799 739
- BE-A- 446 621
- DE-C1- 19 740 471
- DE-U1- 20 205 971
- DE-U1- 20 208 039
- FR-A1- 2 764 671
- JP-A- 11 105 557
- KR-A- 20020 043 724

## Beschreibung

Die vorliegende Erfindung betrifft eine Innenwand für einen Fahrzeugtank mit einer einsickbaren Tankwandung, wobei die Innenwand einen Umfangsteil und einen zentralen Wandteil hat. Die Erfindung betrifft ferner einen Fahrzeugtank, der mit zumindest einer solchen Innenwand ausgestattet ist.

Innenwände dieser Art können sowohl als Trennwände ohne Durchbrechung oder Schwallwände mit Durchbrechungen eingesetzt werden. Eine aus der DE 202 08 039 U1 bekannte Schwallwand der eingangs genannten Art ist als filigraner Gußteil aus Stahl ausgeführt und ihr Umfangsteil wird durch den umgebördelten Rand des Wandteils gebildet. Zur Montage der Innenwand wird der umgebördelte Rand mit der Tankwandung verclincht, d.h. es werden durch gemeinsames Verformen von Umfangsteil und Tankwandung gleichzeitig Sicken in beiden Teilen erzeugt, welche die Innenwand mit der Tankwandung verbinden. Dies hat den Nachteil, daß der umgebördelte Rand der Innenwand von innen mit einer Matrize gegengehalten werden muß, um dem Druck des auf die Tankwandung von außen aufgebrachten Sickstempels widerstehen zu können. Außerdem muß der Rand zum Clinchen entsprechend dünnwandig sein, was wenig Stabilität bietet. Aus der DE 202 05 971 U1, die den nächsten Stand der Technik bildet, ist eine gleichartige Konstruktion bekannt, mit einem sickbaren Innenwand-Umfangsteil aus dünnem Aluminium- oder Stahlblech, wobei die Sicken in Umfangsteil und Tankwandung in voneinander unabhängigen Arbeitsgängen eingebracht werden können. Auch dies hat den Nachteil, dass der umgebördelte vor-gesickte Rand der Innenwand (der Umfangsteil) von innen mit einer Matrize gegengehalten werden muß, um dem Druck des auf die Tankwandung von außen aufgebrachten Sickstempels widerstehen zu können.

Die Erfindung setzt sich zum Ziel, eine Innenwand für einen Fahrzeugtank zu schaffen, welche auf einfachere Art mit der Tankwandung verbindbar ist und eine stabile Konstruktion ergibt.

Dieses Ziel wird erfindungsgemäß dadurch erreicht, daß der Umfangsteil in an sich bekannter Weise außenseitig mit zumindest einer umlaufenden oder mehreren umfangsmäßig verteilten Nut(en) zum darin Einsicken der Tankwandung vorgeformt ist, und der Umfangsteil im Schnitt gesehen etwa T-Profil hat, wobei der Wandteil an den Mittelsteg des T-Profils anschließt.

Auf diese Weise bildet der Umfangsteil der Innenwand selbst die Matrize für das Aufsicken der Tankwandung, was ein Gegenhalten von innen beim Sickvorgang erübrigt. Dies erleichtert wesentlich die Fertigung, da nicht mehr von innen in den Tank eingegriffen werden muß. Darüber hinaus ist die Sickgeometrie bereits im Umfangsteil der Innenwand vordefiniert, so daß geringere Fertigungstoleranzen erzielt werden können. Es ist auch weniger Sickkraft nötig, da nur mehr die Tankwandung verformt werden muß. Schließlich braucht das Material des Umfangsteils selbst nicht verformbar zu sein, sodaß dieser als entsprechend stabiler Teil, z.B. als Gußteil, Schmiedeteil oder gebogener Strangpreßteil ausgeführt werden kann. Dadurch, daß der Wandteil mittig zum Umfangsteil liegt bzw. der Umfangsteil symmetrisch zu beiden Seiten des Innenteils auskragt, wird im Vergleich zu den bekannten Innenwänden mit umgebördeltem Rand eine wesentlich bessere Krafteinleitung und eine Minimierung der Biegebeanspruchungen zwischen Umfangsteil und Wandteil erreicht. Im Ergebnis ermöglicht die erfindungsgemäße Innenwand eine stark vereinfachte Fertigung hochstabiler Fahrzeugtanks.

Besonders vorteilhaft ist es, wenn die Stegdicke des Mittelstegs des T-Profils nach außen hin zunimmt und in die Schenkel des T-Profils rund ausläuft. Dies ergibt eine optimale Kräfteverteilung mit minimalem Materialeinsatz und entsprechender Gewichtseinsparung.

Bevorzugt ist das T-Profil mit Verstärkungsrippen ausgesteift, wodurch eine weitere Querschnittsverringerung des T-Profils bei gleichbleibender Festigkeit möglich ist.

Gemäß einer weiteren bevorzugten Ausführungsform der Erfindung nimmt auch die Wanddicke des Wandteils nach innen hin ab. Dadurch kann nochmals eine Gewichtsreduktion ohne Beeinträchtigung der Festigkeit erzielt werden.

Die Innenwand der Erfindung kann an sich aus jedem beliebigen entsprechend stabilen Material gefertigt werden, z.B. aus Stahl oder Hartkunststoff. Insbesondere für Fahrzeugtanks mit einer Tankwandung aus Aluminiumblech wird bevorzugt vorgesehen, daß zumindest der Umfangsteil der Innenwand ein Guß-, Schmiede- oder Strangpreßteil ist, bevorzugt aus Aluminium, was einerseits hohe Stabilität bei geringem Gewicht bietet und anderseits die Gefahr einer Kontaktkorrosion zwischen dem Umfangsteil und der Tankwandung hintanhält.

Auch der Wandteil kann bevorzugt ein Guß-, Schmiede- oder Strangpreßteil sein, bevorzugt aus Aluminium. Eine bevorzugte Ausführungsform besteht darin, daß der Wandteil ein gesondertes Element und mit seinem Außenbereich in den Umfangsteil eingebettet oder mit dem Umfangsteil vernietet, verschraubt, verschweißt, verclincht oder verklebt ist, beispielsweise wenn der Wandteil aus einem kostengünstigeren Tiefziehblech oder anderem Material, z.B. Kunststoff als der Umfangsteil gefertigt werden soll. Alternativ kann der Wandteil bevorzugt mit dem Umfangsteil einstückig sein.

Eine weitere bevorzugte Ausführungsform der Erfindung, welche sich besonders für parallelepipedische Fahrzeugtanks eignet, zeichnet sich dadurch aus, daß sie eine abgerundet-polygonförmige Kontur hat und die Nuten in den Polygonecken verteilt sind. Dadurch können die Sicken auf einige wenige Umfangsstellen beschränkt werden, was die Fertigung des Tanks weiter vereinfacht.

Bevorzugt bildet die Innenwand der Erfindung eine Schwallwand und der Wandteil - und bevorzugt auch der Umfangsteil - sind dazu mit entsprechenden Durchbrechungen versehen.

In einem weiteren Aspekt schafft die Erfindung auch einen Fahrzeugtank mit einer Tankwandung aus Metallblech, insbesondere Aluminiumblech, der sich durch zumindest eine Innenwand der hier vorgestellten Art auszeichnet, in deren Nut(en) die Tankwandung eingesickt ist.

Die Erfindung wird nachstehend anhand von in den beigeschlossenen Zeichnungen dargestellten Ausführungsbeispielen näher erläutert. In den Zeichnungen zeigen:
Fig. 1 einen Ausschnitt aus einem Fahrzeugtank, in den eine Innenwand gemäß der Erfindung eingesetzt ist, in einer Perspektivansicht ;
Fig. 2 einen Halbschnitt der Innenwand von Fig. 1 ;
die Fig. 3 und 4 die Verfahrensschritte des Aufsickens der Tankwandung auf den Umfangsteil in Teilschnitten ; und
die Fig. 5 und 6 zwei Varianten der erfindungsgemäßen Innenwand mit gesondert eingesetzten Wandteilen jeweils in einem Teilschnitt.

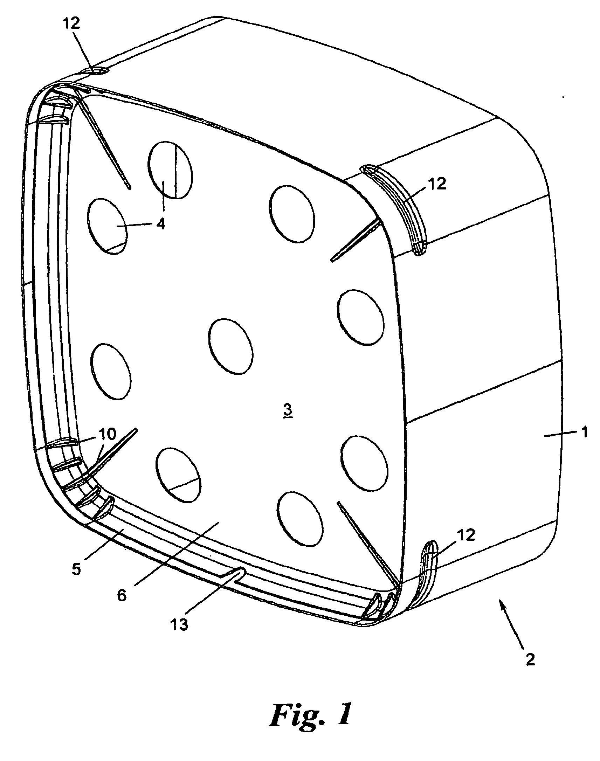

In Fig. 1 ist ein Segment einer Tankwandung 1 eines (nicht weiter dargestellten) Fahrzeugtanks 2 gezeigt, beispielsweise eines Kraftstofftanks für einen Lastkraftwagen. Die Tankwandung 1 ist aus einem dünnwandigen Metallblech gefertigt, z.B. Stahlblech oder bevorzugt Aluminiumblech. In den Tank 2 ist eine Innenwand 3 eingesetzt, beispielsweise eine Trennwand für einen Mehrkammertank oder - wie gezeigt - als Schwallwand mit Durchbrechungen 4.

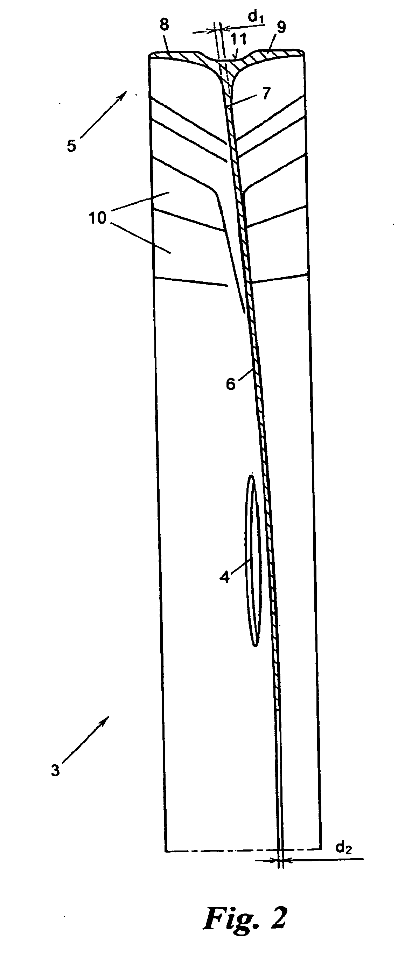

Gemäß Fig. 2 ist die Innenwand 3 als ein einstückiger Gußteil aus Metall gefertigt, z.B. aus Stahl oder Aluminiumdruckguß, oder als Schmiede- oder gebogener Strangpreßteil. Die Innenwand 3 setzt sich aus einem etwa reifenförmigen Umfangsteil 5 und einem zentralen Wandteil 6 zusammen, der etwa mittig an der Innenseite des Umfangsteils 5 ansetzt. Mit anderen Worten hat der Umfangsteil 5 im Querschnitt gesehen etwa T-Profil, wobei der Wandteil 6 an den Mittelsteg 7 des T-Profils anschließt.

Die Stegdicke d₁ des Mittelstegs 7 nimmt nach außen hin fortschreitend zu und läuft in die Schenkel 8, 9 des T-Profils rund aus. Das T-Profil des Umfangsteils 5 kann zusätzlich mit bevorzugt radialen Verstärkungsrippen 10 ausgesteift sein.

Auch die Wanddicke des Wandteils 6 nimmt vom Mittelsteg 7 ausgehend fortschreitend nach innen hin ab, bis zu der eingezeichneten Wanddicke d₂. Beispielsweise beträgt d₁ = 2,5 mm und d₂ = 2 mm.

Der Umfangsteil 5 ist an seiner Außenseite mit (hier) vier über seinen Umfang verteilten Nuten 11 versehen, welche bei der Fertigung der Innenwand 3 mitgefertigt werden, z.B. durch Einformung beim Guß, Einfräsen usw. In dem gezeigten Beispiel eines etwa parallelepipedischen Fahrzeugtanks 2 hat die Innenwand 3 eine abgerundet-polygonförmige Umfangskontur und die Nuten 11 sind bevorzugt nur in den Bereichen der Polygonecken in dem Umfangsteil 5 ausgebildet.

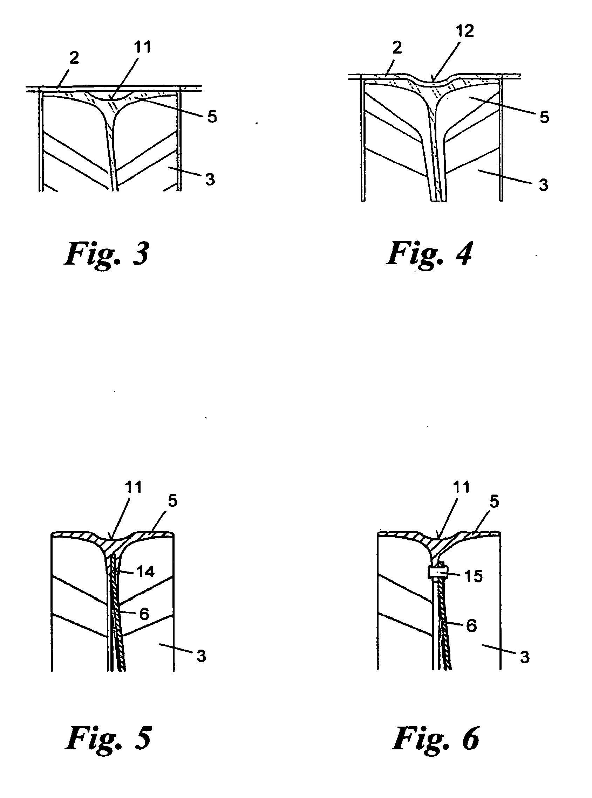

Die Nuten 11 dienen zum anschließenden Einsicken der Tankwandung 2 durch Aufbringen eines entsprechenden Sickstempels (nicht gezeigt) auf die Außenseite der Tankwandung 2, wie in den Fig. 3 und 4 im Detail dargestellt.

Fig. 3 zeigt die Montagesituation der Innenwand 3 in der Tankwandung 2 vor dem Einsicken der Tankwandung 2 und Fig. 4 zeigt die Situation am Ende der Montage nach dem Einsicken der Tankwandung 2 in die Nuten 11, wodurch die Tankwandung 2 Sicken 12 erhält.

Anstelle von mehreren umfangsmäßig verteilten Nuten 11 könnte auch eine einzige umlaufende Nut 11 vorgesehen werden, beispielsweise für Fahrzeugtanks 2 mit zylindrischem Querschnitt, für welche die Innenwand 3 eine entsprechende zylindrische Umfangskontur hat. Darüber hinaus ist es auch möglich, mehr als eine Nut 11 in Axialrichtung des Tanks 2 gesehen nebeneinanderliegend anzuordnen, d.h. sowohl umfangsmäßig verteilte als auch umlaufende Nuten 11 in einander paralleler Anordnung.

Falls gewünscht, können die Nuten 11 auch einen anderen als den gezeigten linearen Verlauf haben, beispielsweise gewellt oder zick-zack-förmig, um entsprechend gewellte oder zick-zack-förmige Sicken 12 darin auszuformen.

Wenn die Innenwand 3 eine Schwallwand bildet, kann optional auch der Umfangsteil 5 mit Durchbrechungen 13 versehen werden, insbesondere an der untersten Stelle des Fahrzeugtanks 2, um dort eine Überlaufmöglichkeit zwischen den durch die Schwallwand abgetrennten Kammern zu bilden.

Die Fig. 5 und 6 zeigen zwei alternative Varianten der Innenwand 3, bei welchen der Wandteil 6 als gesonderter Teil in den Umfangsteil 5 eingesetzt ist. In Fig. 5 ist der Wandteil 6 mit seinem Außenbereich 14 in den Umfangsteil 5 eingegossen, und in Fig. 6 ist der Wandteil 6 mit dem Umfangsteil 5 mittels Nieten 15 verbunden- Alternativ könnte der wandteil 6 mit dem Umfangsteil 5 auch verschraubt, verschweißt, verclincht oder verklebt werden.

Die Erfindung ist nicht auf die dargestellten Ausführungsformen beschränkt, sondern umfaßt alle Varianten und Modifikationen, die in den Rahmen der anschließenden Ansprüche fallen.

## Patentansprüche

1. Innenwand (3) für einen Fahrzeugtank (2) mit einer einsickbaren Tankwandung (1), wobei die Innenwand (3) einen Umfangsteil (5) aus Gußmaterial und einen zentralen wandteil (6) hat, wobei der Umfangsteil (5) in an sich bekannter Weise außenseitig mit zumindest einer umlaufenden oder mehreren umfangsmäßig verteilten Nut(en) (11) zum darin Einsicken der Tankwandung (1) vorgeformt ist, wobei der Umfangsteil (5) im Schnitt gesehen etwa T-Profil hat, und wobei der Wandteil (6) an den Mittelsteg (7) des T-Profils anschließt.

2. Innenwand nach Anspruch 1, **dadurch gekennzeichnet, daß** die Stegdicke des Mittelstegs (7) des T-Profils nach außen hin zunimmt und in die Schenkel (8, 9) des T-Profils rund ausläuft.

3. Innenwand nach Anspruch 1 oder 2, **dadurch gekennzeichnet, daß** das T-Profil mit Verstärkungsrippen (10) ausgesteift ist.

4. Innenwand nach einem der Ansprüche 1 bis 3, **dadurch gekennzeichnet, daß** die Wanddicke des Wandteils (6) nach innen hin abnimmt.

5. Innenwand nach einem der Ansprüche 1 bis 4, **dadurch gekennzeichnet, daß** zumindest ihr Umfangsteil (5) ein Guß-, Schmiede- oder Strangpreßteil ist, bevorzugt aus Aluminium.

6. Innenwand nach einem der Ansprüche 1 bis 5, **dadurch gekennzeichnet, daß** der Wandteil (6) mit seinem Außenbereich (14) in den Umfangsteil (5) eingebettet ist.

7. Innenwand nach einem der Ansprüche 1 bis 5, **dadurch gekennzeichnet, daß** der Wandteil (6) mit dem Umfangsteil (5) vernietet, verschraubt, verschweißt, verclincht oder verklebt ist.

8. Innenwand nach einem der Ansprüche 1 bis 5, **dadurch gekennzeichnet, daß** des Wandteil (6) mit dem Umfangsteil (5) einstückig ist.

9. Innenwand nach einem der Ansprüche 1 bis 8, **dadurch gekennzeichnet, daß** sie eine abgerundet-polygonförmige Kontur hat und die Nuten (11) in den Polygonecken verteilt sind.

10. Innenwand nach einem der Ansprüche 1 bis 9, **dadurch gekennzeichnet, daß** sie eine Schwallwand bildet und der Wandteil (6) und bevorzugt auch der Umfangsteil (5) mit Durchbrechungen (4, 13) versehen sind.

11. Fahrzeugtank mit einer Tankwandung aus Metallblech, insbesondere Aluminiumblech, **gekennzeichnet durch** zumindest eine Innenwand (3) nach einem der Ansprüche 1 bis 10, in deren Nut(en) (11) die Tankwandung (2) eingesickt ist.

## Claims

1. Inner wall (3) for a vehicle tank (2) with a tank wall (1) that can be beaded in, with the inner wall (3) comprising a peripheral part (5) of cast material and a central wall part (6), wherein the peripheral part (5) is conventionally pre-formed with at least one peripheral or several peripherally distributed groove(s) (11) on its outer side in order to bead the tank wall (1) therein, and wherein the peripheral part (5) has, if viewed in the form of a section, approximately a T-profile, with the wall part (6) abutting on the central web (7) of the T-profile.

2. Inner wall according to Claim 1, **characterized in that** the web thickness of the central web (7) of the T-profile increases outward and transforms into the limbs (8, 9) of the T-profile in a rounded fashion.

3. Inner wall according to Claim 1 or 2, **characterized in that** the T-profile is braced with reinforcing ribs (10).

4. Inner wall according to one of Claims 1-3, **characterized in that** the wall thickness of the wall part (6) decreases inward.

5. Inner wall according to one of Claims 1-4, **characterized in that** at least its peripheral part (5) consists of a casting, a forging or an extrusion, preferably of aluminum.

6. Inner wall according to one of Claims 1-5, **characterized in that** the wall part (6) is embedded in the peripheral part (5) with its outer region (14).

7. Inner wall according to one of Claims 1-5, **characterized in that** the wall part (6) is riveted, screwed, welded, clinched or bonded to the peripheral part (5).

8. Inner wall according to one of Claims 1-5, **characterized in that** the wall part (6) is realized integrally with the peripheral part (5).

9. Inner wall according to one of Claims 1-8, **characterized in that** it has a rounded polygonal contour and the grooves (11) are distributed in the corners of the polygon.

10. Inner wall according to one of Claims 1-9, **characterized in that** it forms a baffle and the wall part (6) and preferably also the peripheral part (5) are provided with openings (4, 13).

11. Vehicle tank with a tank wall of a metal sheet, particularly an aluminum sheet, **characterized by** at least one inner wall (3) according to one of Claims 1-10, into the groove(s) (11) of which the tank wall (2) is beaded.

## Revendications

1. Paroi intérieure (3) pour un réservoir de véhicule automobile (2) comprenant une paroi de réservoir (1) susceptible d'être déformée pour y ménager des moulures, ladite paroi intérieure (3) comprenant une partie périphérique (5) en matériau de fonderie et une partie de paroi centrale (6), dans lesquelles la partie périphérique (5) est prédéformée d'une manière connue en soi du côté extérieur avec au moins une ou plusieurs gorge(s) (11) réparties en périphérie pour former les moulures de la paroi de réservoir (1), et dans laquelle la partie périphérique (5) possède en coupe un profil approximativement en T, la partie de paroi (6) étant raccordée au pied central (7) du profil en T.

2. Paroi intérieure selon la revendication 1, **caractérisée en ce que** l'épaisseur du pied central (7) du profil en T augmente vers l'extérieur, et se termine par un arrondi dans les branches (8, 9) du profil en T.

3. Paroi intérieure selon la revendication 1 ou 2, **caractérisée en ce que** le profil en T est rigidifié avec des nervures de renforcement (10).

4. Paroi intérieure selon l'une des revendications 1 à 3, **caractérisée en ce que** l'épaisseur de la partie de paroi (6) diminue en direction de l'intérieur.

5. Paroi intérieure selon l'une des revendications 1 à 4, **caractérisée en ce que** sa partie périphérique (5) au moins est une pièce de fonderie, de forge ou une pièce extrudée, de préférence en aluminium.

6. Paroi intérieure selon l'une des revendications 1 à 5, **caractérisée en ce que** la partie de paroi (6) est noyée dans la partie périphérique (5) par sa zone extérieure (14).

7. Paroi intérieure selon l'une des revendications 1 à 5, **caractérisée en ce que** la partie de paroi (6) est rivetée, vissée, soudée, agrafée ou collée avec la partie périphérique (5).

8. Paroi intérieure selon l'une des revendications 1 à 5, **caractérisée en ce que** la partie de paroi (6) est d'une seule pièce avec la partie périphérique (5).

9. Paroi intérieure selon l'une des revendications 1 à 8, **caractérisée en ce qu'**elle possède un contour à forme polygonale arrondie, et les gorges (11) sont réparties dans les coins du polygone.

10. Paroi intérieure selon l'une des revendications 1 à 9, **caractérisée en ce qu'**elle forme un brise-flot, et la partie de paroi (6) et de préférence également la partie périphérique (5) sont pourvues de perçages (4, 13).

11. Réservoir de véhicule automobile comprenant une paroi de réservoir en tôle métallique, en particulier en tôle d'aluminium, **caractérisé par** au moins une paroi intérieure (3) selon l'une des revendications 1 à 10, telle que la paroi de réservoir (2) est engagée à la manière de moulures dans ses gorges (11).
